# EUROPEAN PATENT APPLICATION

(11) **EP 1 302 417 A1**
(43) Date of publication of application: **16.04.2003**
(21) Application number: 02256952.9
(22) Date of filing: 08.10.2002
(51) Int. Cl.: B65G 45/12, B65G 45/16

(54) **Conveyor belt cleaner including a scraper blade mounting apparatus having a biasing member**

(30) Priority: 09.10.2001 US 328060 P
(71) Applicant: Martin Engineering Company, Neponset, Illinois 61345-9766 (US)
(72) Inventor: Veenhof, Willem D., Brevard, North Carolina 28712 (US)
(74) Representative: Goodenough, Nigel

(57) **Abstract**

A scraping device for scraping material from a surface to be cleaned, for example the surface (32) of a conveyor (34) includes a support member (24) and a retainer member (56) attached to the support member. The retainer member includes a cavity adapted to receive a pad (120) of resilient elastomeric material having a retarded resilience. A mounting member (100) is located within the cavity of the retainer member. A scraper blade (23) extends through an opening in the retainer member and is attached to the mounting member. The pad enables the mounting member and the scraper blade to pivot about a first edge (106) of the mounting member between a first position and a second position, and to pivot about a second edge (108) of the mounting member between the first position and a third position. The pad (120) biases the scraper blade with retarded resilience to pivot from the second position toward the first position, and from the third position toward the first position.

## Description

### Related Applications

This application claims the benefit of U.S. Provisional Application No. 60/328,060, filed October 9, 2001.

### Background of the Invention

The present invention is directed to a conveyor belt cleaner including a scraper blade mounting apparatus having a biasing member for resiliently mounting one or more scraper blades to a support member.

Scraper blades are used for scraping material from a stationary surface, such as a snow plow scraper blade that scrapes ice and/or snow from a road surface, and are also used for scraping material from a moving surface, such as a conveyor belt cleaner scraper blade that scrapes material from the surface of a moving conveyor belt. It is advantageous to provide the scraper blade with a range of motion which allows the scraper blade to disengage from an obstruction that is fixed to the surface to be cleaned without causing damage to the scraper blade or to the surface, and to also enable the scraper blade to follow any undulations in the surface to be cleaned to provide substantially continuous removal of material from the surface. A scraper blade is provided with a range of motion by providing the scraper blade with one or more pivot points, or one or more pivot axes, about which the scraper blade may pivot. A biasing mechanism is provided which will return the scraper blade to its original scraping orientation if the scraper blade is pivoted away from the surface by engagement with a fixed obstruction in order to maintain relatively continuous scraping engagement with the surface.

The provision of a biasing or tensioning force to a scraper blade to maintain scraping engagement with a surface has been achieved by the use of counter-weights, springs, air bags such as gas-filled shock absorbers, and liquid filled devices, that act in either compression, tension or torsion to pivot or otherwise move the scraper blade into scraping engagement with the surface. Most ofthese devices provide a return biasing force, which returns the scraper blade to its original scraping orientation, that increases in magnitude as the scraper blade is increasingly displaced from its scraping position or unbiased rest position. Prior biasing devices are also susceptible to causing the scraper blade to resonate, which is a reinforced vibration, against the surface to be cleaned. The high energy return of a displaced scraper blade to its original scraping position, which occurs when vibration is present, is destructive to both the scraping device and the surface being scraped.

A scraper blade is preferably mounted on a support member by a mounting apparatus which provides a controlled range of motion to the scraper blade, and which provides a sufficient range of motion in multiple axes to enable the scraper blade to follow surface undulations and to also disengage from obstructions on the surface, such as protruding materials, without generating forces applied to the scraper blade which are sufficient in magnitude to cause damage to the blade or the surface to be scraped, or to cause the scraper blade to resonate against the surface.

Despite numerous variations within the known art for mounting a scraper blade to a support member, a need still exists for a conveyor belt cleaner having a scraper blade mounting apparatus which will resiliently maintain the scraper blade in biased scraping engagement with the surface to be cleaned with a relatively constant biasing force, while not causing damage to the scraper blade or to the surface being cleaned.

### Summary of the Invention

The present invention is directed to a scraping device, such as a conveyor belt cleaner, for scraping material from a surface to be cleaned, such as the surface of a conveyor belt. The scraping device includes an elongate support member and a mounting apparatus attached to the support member. The mounting apparatus includes a retainer member attached to the support member. The retainer member includes a includes a cavity such as a pocket. A biasing member such as a pad of resilient elastomeric material is located within the cavity of the retainer member. The mounting apparatus includes a restraining member that is removably attached to the support member to provide an opening through which the biasing member can be removed from the cavity. The mounting apparatus includes one or more finger members that form one or more openings in communication with the cavity. A mounting member is located within the cavity of the retainer member between the pad and the retainer member. A scraper blade extends through one or more ofthe openings provided by the finger members into the cavity and is attached to the mounting member. The mounting member includes a generally linear front edge and a spaced apart and generally parallel linear rear edge. The pad enables the mounting member and the scraper blade to pivot from an at rest first position to a second position about a first pivot axis located along the front edge of the mounting member while compressing the pad. The pad also allows the mounting member and scraper blade to pivot in an opposite direction from the first position to a third position about a second pivot axis located along the rear edge of the mounting member while compressing the pad. The pad resiliently biases the mounting member and the scraper blade to pivot from the second position toward the first position, and from the third position toward the first position. The pad is preferably formed from a polyurethane composition that provides a retarded resilience in that the rate of recovery of the pad after deformation to its original configuration is gradual and not rapid.

### Brief Description of the Drawing Figures

Figure 1 is a partial front elevational view of a conveyor belt cleaner scraping device with a scraper blade mounting apparatus having a biasing member.

Figure 2 is an end view of the scraping device taken along line 2-2 of Figure 1 with the scraper blade shown in an unbiased or rest position.

Figure 3 is a side elevational view of the scraping device shown with the scraper blade in scraping engagement with a conveyor belt moving in a first direction.

Figure 4 is a side elevational view of the scraping device shown with the scraper blade in engagement with the conveyor belt wherein the conveyor belt is moving in a second direction.

Figure 5 is a top plan view of the scraping device.

Figure 6 is a rear elevational view of the scraping device shown with the restraining member of the mounting apparatus removed.

Figure 7 is a front elevational view of the restraining member of the mounting apparatus.

Figure 8 is a front elevational view of another embodiment of a conveyor belt cleaner scraping device with a scraper blade mounting apparatus having a biasing member.

Figure 9 is a cross sectional view of the scraping device taken along line 9-9 of Figure 8 with the scraper blade in an at rest position.

Figure 10 is a cross sectional view of the scraping device of Figure 8 shown with the scraper blade in scraping engagement with a conveyor belt moving in a first direction.

Figure 11 is a cross sectional view of the scraping device of Figure 8 shown with the scraper blade in engagement with the conveyor belt wherein the conveyor belt is moving in a second direction.

Figure 12 is a top plan view of the scraping device of Figure 8.

Figure 13 is a rear elevational view of the scraping device of Figure 8 shown with the restraining member of the mounting apparatus removed.

Figure 14 is a front elevational view of the restraining member ofthe mounting apparatus of the scraper device of Figure 8.

### Detailed Description of the Preferred Embodiments

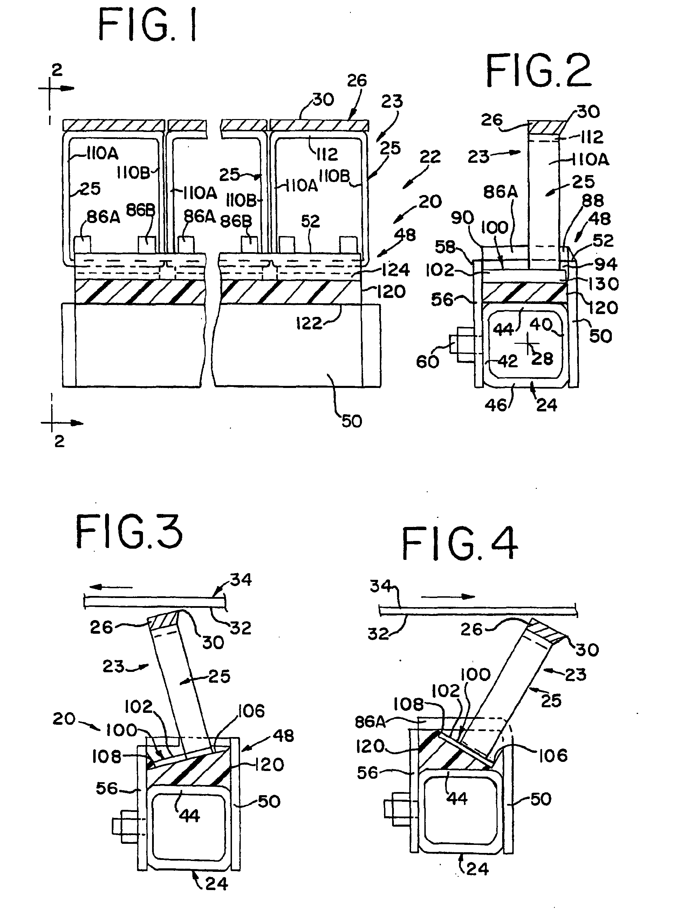

One embodiment of a scraping device such as a conveyor belt cleaner 22 is shown in Figures 1-7. The conveyor belt cleaner 22 includes a scraper blade mounting apparatus 20. One or more scraper blades 23 are attached to the mounting apparatus 20. Each scraper blade 23 includes a scraping edge 30 which is adapted to engage the surface 32 of an object to be cleaned such as a conveyor belt 34. Each scraper blade 23 may include an arm member 25 having a first end and a second end. A scraping element 26 is attached to the second end of the arm member 25. The scraping element 26 includes the scraping edge 30. The scraping element 26 may be made from an elastomeric material such as urethane. Alternatively, the scraping element 26 or an insert member attached to the scraping element 26 may be made from a wear-resistant material such as tungsten carbide, alumina ceramics, steel faced with polycrystalline diamonds, or the like. The scraping device as shown in the drawing figures is configured to scrape the surface 32 of a conveyor belt 34. However, the mounting apparatus 20 may be used to mount scraper blades and scraping elements for other purposes such as for scraping ice or snow from roadway surfaces.

The conveyor belt cleaner 22 includes a support member 24 which comprises an elongate generally rectangular tube having a generally linear central axis 28. The support member 24 may be formed from other structural members as desired. The support member 24 includes a generally planar front wall 40, a generally planar rear wall 42 which is spaced apart and generally parallel to the front wall 40, a generally planar top wall 44 which extends between the front and rear walls 40 and 42, and a generally planar bottom wall 46. The mounting apparatus 20 is attached to the support member 24 and is adapted to removably attach one or more scraper blades 23 to the support member 24. The support member 24 may be attached at each end to a stationary support structure such as a conveyor housing. Alternatively, a generally rectangular cross shaft may be inserted through the bore within the support member 24 such that the cross shaft and support member 24 are conjointly rotatable about the central axis 28 and such that the ends of the cross shaft may be attached to a stationary support structure.

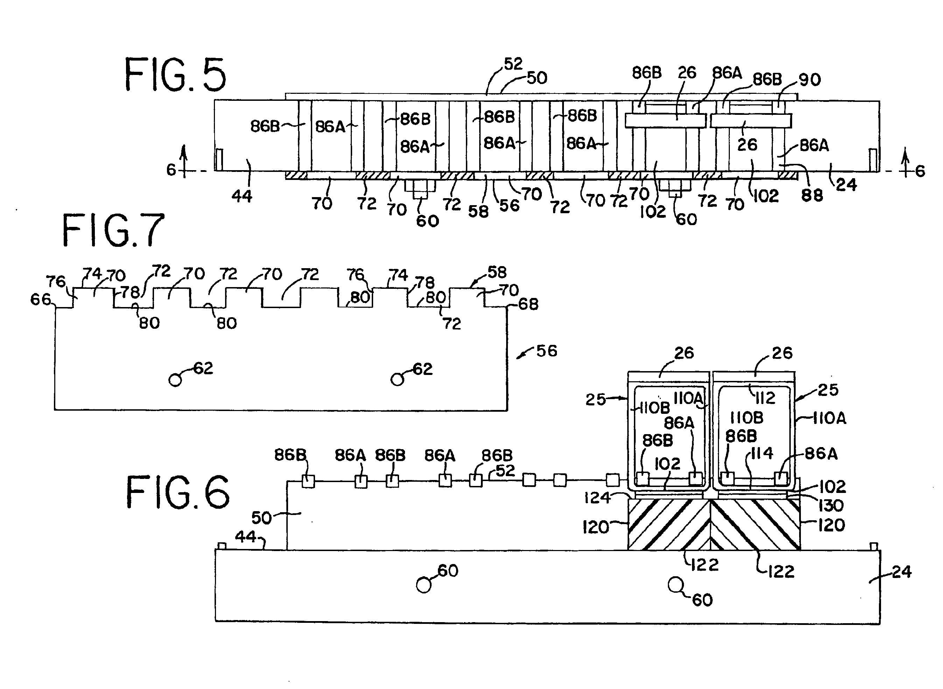

The mounting apparatus 20 includes a retainer member 48 attached to the support member 24. The retainer member 48 includes a generally planar and plate-like front wall member 50 having a bottom end that is attached to the front wall 40 of the support member 24 by welding or the like. The front wall member 50 extends vertically upward above the top wall 44 of the support member 24 to a generally linear edge 52. The front wall member 50 extends from a first end located adjacent a first end of the support member 24 to a second end located adjacent a second end of the support member 24. The mounting apparatus 20 also includes a generally planar and plate-like restraining member 56 having a first end located adjacent to the first end of the support member 24 and a second end located adjacent to the second end of the support member 24. The bottom end of the restraining member 56 is removably attached to the rear wall 42 of the support member 24. The restraining member 56 extends generally vertically upward above the top wall 44 of the support member 24 to a generally serrated upper edge 58. The rear wall 42 ofthe support member 24 includes a plurality of threaded studs 60 that extend outwardly from the rear wall 42. As best shown in Figure 7, the restraining member 56 includes a plurality of apertures 62. Each aperture 62 is adapted to receive a respective stud 60. The restraining member 56 is removably attached to the support member 24 by nuts 64 that are respectively threadably attached to each stud 60.

As shown in Figure 7, the upper serrated edge 58 of the restraining member 56 extends from a first end 66 to a second end 68. The serrated edge 58 has a generally square-wave configuration. The serrated edge 58 forms a plurality of spaced apart generally rectangular fingers or projections 70. A generally rectangular notch or recess 72 is formed between each adjacent pair of projections 70. Each projection 70 includes a top edge 74 which extends between a first side edge 76 and a second side edge 78 of the projection. A bottom edge 80 extends between adjacent pairs of projections 70 at the bottom of each recess 72.

The retainer member 48 also includes one or more generally linear and elongate finger members 86A-B. Each finger member 86A-B is generally rectangular in cross section and extends generally linearly between a first end 88 and a second end 90. The first end 88 of each finger member 86A-B is attached to the upper end ofthe front wall member 50 by welding or like. Each finger member 86A-B extends outwardly from the front wall member 50 to the second end 90 of the finger member 86A-B in a generally cantilevered manner perpendicular to the front wall member 50. The second end 90 of each finger member 86A-B is located adjacent to the restraining member 56. The finger members 86A-B are spaced vertically above the top wall 44 of the support member 24. Each finger member 86A is spaced apart a uniform distance from an adjacent finger member 86B. The second end 90 of a finger member 86A is located adjacent the second side edge 78 of a projection 70 of the restraining member 56 and the second end 90 of a finger member 86B of an adjacent pair of finger members 86A-B is located adjacent to the first side edge 76 of the same projection 70. A cavity 94 such as a pocket is formed between the front wall member 50 and the restraining member 56, and between the top wall 44 of the support member 24 and the finger members 86A-B. The finger members 86A-B provide openings in communication with the cavity 94.

The mounting apparatus 20 includes one or more mounting members 100. Each mounting member 100 includes a generally rectangular and plate-like base member 102. The first end of the arm member 25 of the scraper blade 23 is attached to the base member 102. The arm member 25 extends generally vertically upwardly from the base member 102. The base member 102 includes a generally linear front edge 106 and a generally linear rear edge 108 spaced apart and generally parallel to the front edge 106, Each arm member 25 of a scraper blade 23 may include a pair of upstanding spaced apart legs 110A-B. A generally plate-like top member 112 extends between the top ends of the adjacent legs 110A-B. A generally plate-like bottom member 114 extends between the bottom ends of the adjacent pairs of legs 110A-B. The bottom ends of the legs 110A-B and the bottom member 114 of the arm member 25 are attached to the base member 102 by welding or the like. The arm member 25 may be formed from a rectangular tube such as a three inch by four inch metal tube. A pair offinger members 86A-B is located between the legs 110A-B of each arm member 25 adjacent the bottom member 114 and base member 102. The finger member 86A is located adjacent the leg 110A and the finger member 86B is located adjacent the leg 110B. The front end of the arm member 25 is located adjacent the front edge 106 ofthe base member 102 and the rear end of the arm member 25 is spaced apart from the rear edge 108 of the base member 102. The scraping element 26 is removably or permanently attached to the top member 112 at the top end of the arm member 25.

The mounting apparatus 20 also includes one or more biasing members such as pads 120 formed of resilient elastomeric material. A resilient pad 120 is preferably respectively provided for each mounting member 100, although a single resilient pad 120 may be used in connection with a plurality of mounting members 100 if desired. Each pad 120 is in the general form of a rectangular parallelepiped, but may be formed in other shapes if desired. Each pad 120 includes a generally planar bottom surface 122, which is supported by the top wall 44 of the support member 24, and a spaced apart and generally parallel planar upper surface 124. Each pad 120 includes a front surface which is adapted to be located adjacent to the interior of the front wall member 50 and a rear surface which is adapted to be located adjacent to the interior of the rear wall member 56. Each pad 120 is located within the cavity 94 between the top wall 44 of the support member 24 and the base member 102 of a mounting member 100. One or more shims 130 in the form of generally rectangular plates may be located between the upper surface 124 of the pad 120 and the base member 102 of the mounting member 100. If desired, one or more shims may be located between the bottom surface 122 of each pad 120 and the top wall 44 of the support member 24. One or more shims may also be located between the bottom member 114 of the arm member 104 and the finger members 86A-B.

A preferred resilient elastomeric material from which the pads 120 may be formed is disclosed in U.S. Patent No. 5,798,411, issued August 25, 1998, for Compressible Polyurethane Compositions Having Minimal Tack and Articles Therefrom, which is incorporated herein by reference. The resilient elastomeric material of the pad 120 is formed from a polyurethane composition which may comprise 140 parts by weight of a polyol, wherein polyols include diols, from about 50 to 70 parts by weight of a diisocyanate compound, the polyols, diols and diisocyanate compounds being selected from the group consisting ofreactants capable offorming polyurethanes, from about one to about 30 percent by weight of a plasticizer based upon the weight of the polyurethane composition, and from about 0 to about 100 parts by weight of a mineral filler, based upon 100 parts by weight of the polyurethane composition. The plasticizer may comprise mineral oil. The mineral filler may be selected from the group consisting of calcium carbonate and clays. This pad material is available from The Hygenic Corporation of Akron, Ohio, which is the assignee of Patent No. 5,798,411.

One composition of the resilient pad material that is available from The Hygenic Corporation as formulation reference number WO3301 comprises 140 parts by weight polyol, 62.5 parts by weight diisocyanate, and 13 parts by weight mineral oil. A two inch diameter ball of this resilient material can be compressed to one inch with the application of seventeen pounds of force. A two inch diameter ball of this material can be compressed to less than forty percent of its diameter. A two inch diameter ball of this material takes about twenty seconds to recover from a fifty percent compression.

Another composition of the resilient pad material that is available from The Hygenic Corporation comprises 140 parts by weight polyol, 60 parts by weight diisocyanate, and 7 parts by weight mineral oil. A two inch diameter ball of this resilient material can be compressed to one inch with the application of eight pounds of force.

The resilient pad material will not take a set when deformed by compression under a load and resiliently returns to its original shape when the load is removed. The resilient material therefore has a retarded resilience in that its rate of recovery after deformation by compression is gradual and not rapid. The biasing force generated by the return of the pad 120 to its original configuration is not sufficient to cause the scraper element 26 to resonate in engagement with the conveyor belt 34. The composition of the resilient material that forms the pads 120 and the thickness of the pad 120 may be varied depending on the scraping application with which the mounting apparatus 20 will be used to make the pads 120 stiffer or softer as may be needed while retaining retarded resilience. The fluid-like nature of the pad 120 in its ability to deform allows the mounting member 100 and scraper blade 23 to move vertically and to pivot in any direction from a center of rotation. The pad 120 provides a floating pivot point such that the mounting member 100 and scraper blade 23 are able to pivot in multiple directions about the pivot point and to move vertically.

In operation, to assemble the mounting apparatus 20, the restraining member 56 is removed from the support member 24. A metal shim is placed adjacent the bottom surface 22 and a metal shim is placed adjacent the upper surface 124 of a pad 120. The pad 120 and shims are then inserted into the cavity 94 such that the bottom shim provides a metal on metal sliding surface with the support member 24 and the top shim provides a metal on metal sliding surface with the finger members 86A-B, which enables the pads 120 to be relatively easily slid into the cavity 94 between the support member 24 and the finger members 86A-B. The shims may be removed if desired.

The base member 102 of the mounting member 100 and the bottom member 114 of the arm member 25 are then slid into the cavity 94 between the finger members 86A-B and the upper surface 124 of the pad 120. One or more shims 130 may be placed between the pad 120 and the base member 102 of the mounting member 100, or between the bottom surface 122 of the pad 120 and the top wall 44 of the support member 24, to bias the base member 102 of the mounting member 100 into engagement with the finger members 86A-B with a desired force by compressing the pad 120 a desired amount. The amount of compression initially provided to the pads 120, and the resulting biasing force provided by the pad 120 to the blade holder 100, will vary depending upon the scraping application for which the scraping device 22 will be utilized.

One or more shims may also be located between the bottom member 114 ofthe mounting member 100 and the finger members 86A-B to compress the pad 120 and to also adjust the height of the scraping element 26 above the support member 24. The height of each scraping element 26 may thereby be individually adjusted to take into account deflections of the conveyor belt across the width of the belt.

The restraining member 56 is then replaced against the support member 24 with a threaded stud 60 extending through each aperture 62. Nuts 64 are threadably attached to the studs 60 to attach the restraining member 56 to the support member 24. The pad 120 is thereby located within the cavity 94 between the front wall member 50, rear wall member 56, top wall 44 of the support member 24, and the base member 102 of the blade holder 100.

When the scraping edge 30 of the scraping element 26 is in scraping engagement with the surface 32 of a conveyor belt 34 moving in a forward direction as shown by the arrow in Figure 3, the mounting member 100 and scraping element 26 will pivot about a pivot axis at the front edge 106 of the base member 102 of the mounting member 100 that is generally parallel to the central axis 28 of the support member 24, from a first position as shown in Figure 2 to a second position as shown in Figure 3. The front edge 106 of the base member 102 will engage the finger members 86A-B and the rear edge 108 of the base member 102 will be forced downwardly into the resilient pad 120 compressing the pad 120. The resilient properties of the pad 120 will bias the mounting member 100 and scraping element 26 in a clockwise direction as shown in Figure 3 about the pivot axis at the front edge 106 of the base member 102. The pad 120 thereby biases the scraping element 26 with retarded resilience from the second position toward the first position into scraping engagement with the surface 32 of the conveyor belt 34 with a scraping force. If an obstruction such as a splice on the surface of the belt 34 is encountered, the scraping element 26 and mounting member 100 will pivot in a counter-clockwise direction about the pivot axis at the front edge 106 of the base member 102 away from the surface 32 of the conveyor belt 34 to allow the obstruction to pass beyond the scraping element 26. The pad 120 will then bias the scraping element 26 and mounting member 100 with retarded resilience to pivot about the front edge 106 of the base member 102 in a clockwise direction with a reengagement force until the scraping edge 30 of the scraping element 26 again engages the conveyor belt 34. The reengagement force provided by the pad 120 is approximately equal to the scraping force provided by the pad 120.

If the direction of movement of the conveyor belt is reversed to the direction of the arrow as shown in Figure 4, the conveyor belt 34 will force the scraping element 26 and mounting member 100 to pivot in a clockwise direction from the position as shown in Figure 3 to a third position as shown in Figure 4. The conveyor belt 34 will force the scraping element 26 and mounting member 100 downwardly into the pad 120 and will continue to pivot the scraping element 26 and mounting member 100 in a clockwise direction until they are located in the position as shown in Figure 4 thereby compressing the pad 120. As shown in Figure 4, the scraping element 26 and mounting member 100 may pivot about an axis located along the rear edge 108 of the base member 102 which is generally parallel to the central axis 28 ofthe support member 24. The pad 120 will bias the mounting member 100 and scraping element 26 with retarded resilience to pivot about the rear edge 108 from the third position as shown in Figure 4 toward the first position as shown in Figure 2. When the direction of the conveyor belt 34 is again reversed to the forward direction as shown in Figure 3, the scraping element 26 and mounting member 100 will pivot in a counter-clockwise direction back to the position as shown in Figure 3. The mounting apparatus 20 thereby enables the direction of conveyor belt movement to be reversed without damaging the scraping device 22 or the conveyor belt 34. The notches or recesses 72 in the rear wall member 56 provide openings through which material that has been scraped from the surface 32 of the conveyor belt 34 can exit the cavity 94.

The arm members 25 may be located adjacent to one another and in alignment with one another as shown in Figures 1 and 2, or alternatively, the arm members 25 and scraping elements 26 may be located in an alternating staggered and overlapping configuration with an arm member 25 being located in a forward position and the adjacent arm member 25 being located in a rearward position. The resilient pads 120 allow the arm members 25, scraping elements 26 and mounting members 100 to pivot about a first axis which is generally horizontal and parallel to the central axis 28 of the support member 24, and to pivot about a second axis which is generally horizontal and perpendicular to the central axis 28 of the support member 24. The pad member 120 also allows the mounting member 100, arm member 25 and scraping element 26 to move vertically upwardly and downwardly with respect to the retainer member 48 and support member 24.

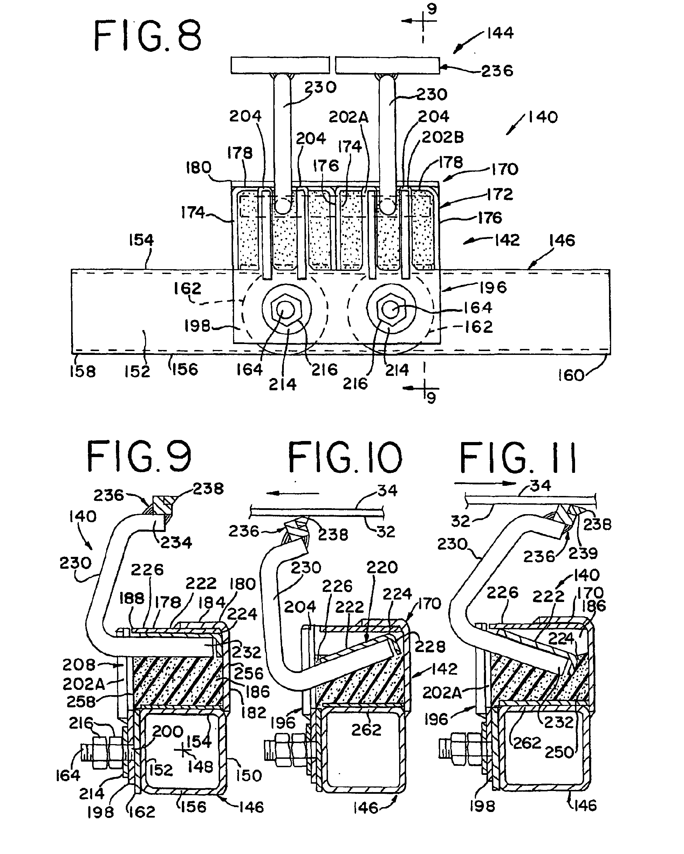

Figures 8 through 14 show another embodiment of the scraping device of the present invention in the form of a conveyor belt cleaner 140. The conveyor belt cleaner 140 includes a scraper blade mounting apparatus 142 and one or more scraper blades 144 removably mounted to the mounting apparatus 142. The conveyor belt cleaner 140 includes a support member 146 which comprises an elongate generally rectangular tube having a generally linear central axis 148. The support member 146 may alternatively be formed as a circular tube or from other structural members as desired. The support member 146 includes a generally planar front wall 150, a generally planar rear wall 152 which is spaced apart and generally parallel to the front wall 150, a generally planar top wall 154 which extends between the front and rear walls 150 and 152, and a generally planar bottom wall 156 that extends between the front and rear walls 150 and 152 and that is spaced apart and generally parallel to the top wall 154. The support member 146 extends between a first end 158 and a second end 160. One or more circular washers 162 are attached by welding or the like to the rear wall 152 of the support member 156. Each washer 162 includes a central aperture. A threaded stud 164 is located within the aperture of each washer 162 and is attached to the front wall 150 and washer 162 by welding or the like. The mounting apparatus 142 is attached to the support member 146 and is adapted to removably attach one or more scraper blades 144 to the support member 146. The support member 146 may be attached at each end to a stationary support structure such as a conveyor housing.

The mounting apparatus 142 includes a retainer member 170 attached to the support member 146. The retainer member 170 includes one or more inverted generally U-shaped brackets 172. The bracket 172 includes a generally planar first side wall 174 and a generally planar second side wall 176 that is spaced apart from and generally parallel to the first side wall 174. The bottom edges of the first and second side walls 174 and 176 are attached to the top wall 154 of the support member 146. The first and second side walls 174 and 176 extend vertically upwardly from the top wall 154 and generally perpendicular to the top wall 154 of the support member 146. The bracket 172 also includes a generally planar top wall 178 that extends between the upper edges of the first and second side walls 174 and 176. The top wall 178 is spaced apart from and generally parallel to the top wall 154 of the support member 146 and generally perpendicular to the side walls 174 and 176. The retainer member 170 also includes a generally L-shaped bracket 180. The L-shaped bracket 180 includes a generally planar front wall 182 and a generally planar lip 184 that extends outwardly from the upper end of the front wall 182 generally perpendicular to the front wall 182. The bracket 180 is attached to the bracket 172 and the support member 146 such that the front wall 182 extends between the first and second side walls 174 and 176 of the bracket 172 and between the top wall 178 of the bracket 172 and the top wall 154 of the support member 146. The lip 184 of the bracket 180 is located on the top surface of the top wall 178 of the bracket 172 and is attached thereto by welding or the like. The retainer member 170 includes one or more cavities 186. Each cavity 186 is located between the first and second side walls 174 and 176 of the bracket 172, between the top wall 178 of the bracket 172 and the top wall 154 of the support member 146, and adjacent the front wall 182 of the bracket 180. The rear edges of the first and second side walls 174 and 176, the rear edge of the top wall 178 of the bracket 172, and the rear edge of the top wall 154 of the support member 146, form an opening 188 that is in communication with the cavity 186. The cavity 186 is generally in the shape of a rectangular parallelepiped.

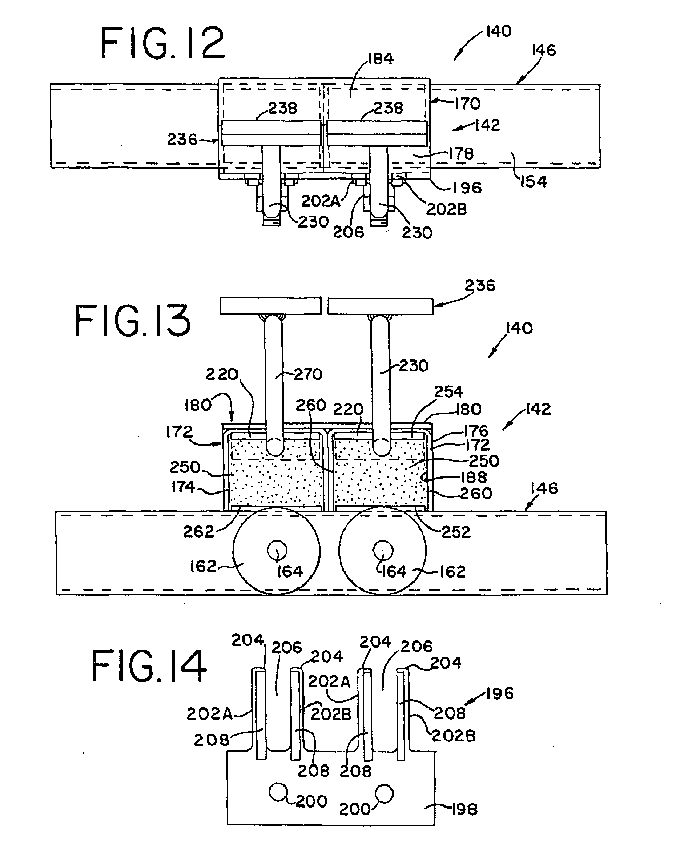

The mounting apparatus 142 also includes a restraining member 196. The restraining member 196 includes a generally planar plate-like attachment member 198. The attachment member 198 includes one or more apertures 200, wherein each aperture 200 is adapted to receive a respective threaded stud 164. The restraining member 196 also includes one or more generally linear and elongate finger members 202A-B Each finger member 202A-B extends upwardly from the upper edge ofthe attachment member 198 to a tip 204 which is located adjacent the rear edge of the top wall 178 ofthe bracket 172. The finger members 202A and 202B are spaced apart and generally parallel to one another. An opening such as a slot 206 is located between the finger members 202A and 202B. As shown in Figure 14, the slot 206 has an open end at the tips 204 of the finger members 202A and B and extends downwardly to a closed end located adjacent the top edge of the attachment member 198. The finger members 202A-B provide the slot 206 that is in communication with the cavity 186 and also provide an opening on each side of the fingers 202A-B which are also in communication with the cavity 186. Each finger member 202A and B includes an elongate reinforcing member 208 which extends generally from the mounting member 198 to the tip 204 of the finger members. The reinforcing member 208 prevents bending of the finger members 202A-B along their longitudinal axis. The finger members 202A-B are preferably uniformly spaced apart from one another and from the first and second side walls 174 and 176 of the retainer member 170. The restraining member 196 is removably attached to the rear wall 152 of the support member 146 by the threaded studs 164. A washer 214 is located over each stud 164 and two nuts 216 are threadably attached to each stud 164 to removably mount the restraining member 196 to the support member 146 and thereby to the retaining member 170.

The mounting apparatus 142 includes a mounting member 220 having a generally rectangular and plate-like base member 222. The base member 222 has a generally linear front edge 224 and a generally linear rear edge 226 spaced apart from and generally parallel to the front edge 224. The base member 222 may also include a rectangular and generally plate-like lip member 228 that is attached to the front edge 224 of the base member 222 and that extends downwardly therefrom generally perpendicular to the base member 222. The lip member 228 and the base member 222 form a convexly curved outer corner surface at the front edge 224 that is adapted to pivotally engage the top wall 178 of the retainer member 170 and to reduce friction with the top wall 178 as the base member 222 pivots from the second position of Figure 10 to the first position of Figure 9. The mounting member 220 is adapted to be located within the cavity 186 of the retainer member 170 such that when the scraper blade 144 is in an unbiased first position as shown in Figure 9, the base member 222 is located adjacent and parallel to the top wall 178 of the bracket 172 and such that the lip member 228 is located adjacent the front wall 182 of the bracket 180. The scraper blade 144 may include an arm member 230 having a first end 232 and a second end 234 which is generally C-shaped. The first end 232 of the arm member 230 is attached to the lower surface of the base member 222 of the mounting member 220. The scraper blade 144 includes a scraping element 236 having a scraping edge 238. The scraping element 236 may include an insert member 239 having the scraping edge 238. The scraping element 236 is attached to the second end 234 of the arm member 230. The scraping element 236 or insert member 239 may be made from a wear-resistant material such as tungsten carbide, alumina ceramics, steel faced with polycrystalline diamonds, or the like. The scraping element 236 may alternatively be made from an elastomeric material such as urethane.

The mounting apparatus 142 also includes one or more resilient biasing members such as pads 250 formed of resilient elastomeric material. A resilient pad 250 is preferably provided for each mounting member 220, although a single pad 250 may be used in connection with a plurality of mounting members 220. Each pad 250 is in the general form of a rectangular parallelepiped, although other shapes may be used. Each pad 250 includes a generally planar bottom surface 252 and a spaced apart and generally parallel planer upper surface 254. The pad 250 also includes a generally planar front surface 256, a generally planar rear surface 258, and two spaced apart and generally parallel planar side surfaces 260. The pad 250 is located within the cavity 186 of the retainer member 170. The front surface 256 is located adjacent the front wall 182 of the bracket 180. The side surfaces 260 of the pad 250 are located respectively adjacent the first and second side walls 174 and 176 of the bracket 172. The upper surface 254 of the pad 250 deforms around the first end 232 of the arm member 230 and is engagement with the base member 222 of the mounting member 220. The bottom surface 252 of the pad 250 is in engagement with the top wall 154 of the support member 146. If desired, a shim 262 in the form of a generally rectangular and planar plate may be located between the bottom surface 252 of the pad 250 and the top wall 154 of the support member 146 to facilitate insertion and removal of the pad 250 within the cavity 186 through the opening 188.

The rectangular pad 250 is restrained on five of its six sides by walls and is restrained on its front surface 258 by the finger members 202A and B of the restraining member 196. However, the slot 206 and side openings provided by the finger members 202A-B allow the pad 250 to bulge through the slot and through the side openings outwardly from the cavity 186 when the pad 250 is deformed. When the pad 250 is made as a solid member, an opening must be provided in the retainer member 170 or restraining member 196 through which the pad may bulge during pivotal movement of the scraper blade 144 as the pad 250 retains its original volume during compression. Alternatively, the pad 250 can include one or more internal hollow cavities to enable the pad 250 to be completely enclosed by the retainer member 170 and restraining member 196 on all sides of the pad 250, but still allow the pad 250 to be deformed by compression with a decrease in volume to allow pivotal movement ofthe scraper blade 144. If desired one or more additional shims may be located between the bottom surface 252 of the pad 250 and the top wall 154 of the support member 146. One or more shims may also be located between the base member 222 of the mounting member 220 and the top wall 178 of the bracket 172 to adjust the height of the scraper blade 144 with respect to the support member 146. The pad 250 is formed from the same resilient elastomeric material from which the pads 120 are formed. The pads 250 also function in the same manner as the pads 120.

In operation, the restraining member 196 is removed from the support member 146. The shim 262 is placed against the bottom surface 252 of the pad 250 and the mounting member 220 of the scraper blade 144 is placed against the top surface 254 of the pad 250. The pad 250, mounting member 220 and shim 262 are slid horizontally through the opening 188 of the retainer member 170 into the cavity 186. The base member 220 and the shim 262 provide a metal on metal sliding surface with the top wall 178 of the retainer member 170 and the top wall 154 of the support member 146, which enables the pad 250 to be relatively easily slid into the cavity 186. One or more additional shims may then be placed between the shim 262 and the top wall 154 of the support member 146, and between the base member 222 of the mounting member 220 and the top wall 178 of the bracket 172 to vary the amount of compression initially provided to the pad 250 and to adjust the height of the scraper blade 144. The restraining member 196 is then placed adjacent the washers 162 of the rear wall 152 of the support member 146 such that the threaded studs 164 extend through the apertures 200. Washers 214 are then placed over the threaded shafts 164 and two nuts 216 are threadably attached to each threaded stud 164. The pad 250 is removed from the cavity in a reverse manner. The lip 228 of the mounting member 220 pulls the pad 250 outwardly from the cavity 186 as the mounting member 220 is removed from the cavity 186.

As shown in Figure 10, when the scraping edge 238 of the scraper blade 144 is in scraping engagement with the surface 32 of a conveyor belt 34 that is moving in a forward direction as shown by the arrow, the scraper blade 144 will pivot from a first position as shown in Figure 9 about a pivot axis at the front edge 224 of the mounting member 220 that is generally parallel to the central axis 148 of the support member 146 to a second position as shown in Figure 10. The arm 230 of the scraper blade 144 will thereby move downwardly within the slot 206 located between the finger members 202A and B of the restraining member 196. The rear edge 226 of the mounting member 220 will be forced downwardly into the resilient pad 250 such that the mounting member 220 compresses the rear portion of the pad 220. The resilient properties of the pad 250 will bias the scraper blade 144 with retarded resilience in a clockwise direction as shown in Figure 10 about the pivot axis at the front edge 224 of the mounting member 220. The pad 250 thereby biases the scraping element 236 with retarded resilience into scraping engagement with the surface 32 of the conveyor belt 34.

If the direction of movement of the conveyor belt is reversed to the direction of the arrow as shown in Figure 11, the conveyor belt 34 will force the scraper blade 144 to pivot in a clockwise direction from the second position as shown in Figure 10 to a third position as shown in Figure 11 about a pivot axis located at the rear edge 226 of the mounting member 220. The conveyor belt 34 will force the rear edge 226 of the mounting member 220 downwardly into the pad 250 such that the mounting member 220 compresses the front portion of the pad 250. The pivot axis of the rear edge 226 of the base member 222 is generally parallel to the central axis 148 of the support member 146. The pad 250 biases the scraper blade 144 with retarded resilience to pivot about the rear edge 226 from the third position as shown in Figure 11 toward the first position as shown in Figure 9. When the direction of the conveyor belt 34 is again reversed to the forward direction as shown in Figure 10, the scraper blade 144 will pivot in a counter-clockwise direction back to the position as shown in Figure 10. The pad member 250 allows the mounting member 222, arm member 230 and scraping element 236 to move vertically upwardly and downwardly with respect to the retainer member 170 and support member 146, and to pivot generally perpendicular to the central axis 148 of the support member 146 about either side edge of the base member 222. The conveyor belt cleaner 140 otherwise operates and functions in the same manner as the conveyor belt cleaner 22 as shown in Figures 1-7.

Various features ofthe invention have been particularly shown and described in connection with the illustrated embodiments of the invention, however, it must be understood that these particular arrangements merely illustrate, and that the invention is to be given its fullest interpretation within the terms of the appended claims.

## Claims

1. A mounting apparatus for mounting a scraper blade to a support member, said mounting apparatus including:
a retainer member adapted to be attached to the support member, said retainer member including a cavity;
a biasing member located within said cavity of said retainer member, said biasing member formed from a resilient elastomeric material; and
a mounting member associated with said biasing member and located within said cavity, said mounting member adapted to be attached to the scraper blade, said mounting member adapted to pivot between an at rest first position and a second position, said mounting member compresses said biasing member as said mounting member pivots from said first position to said second position;
whereby said biasing member is adapted to resiliently bias said mounting member to pivot from said second position toward said first position.

2. Apparatus for scraping material from a surface to be cleaned, said scraping device including:
a support member;
a retainer member attached to said support member, said retainer member including a cavity;
a biasing member located within said cavity of said retainer member, said biasing member formed from a resilient elastomeric material;
a mounting member located within said cavity of said retainer member, said mounting member adapted to pivot within said cavity; and
a scraper blade attached to said mounting member, said scraper blade adapted to pivot with said mounting member between a first position and a second position, said mounting member compresses said biasing member as said mounting member pivots from said first position to said second position;
whereby said biasing member is adapted to resiliently bias said scraper blade to pivot from said second position toward said first position.

3. The apparatus of claim 1 or claim 2 wherein said mounting member comprises a base member having a first edge and a second edge, said mounting member adapted to pivot between said first position and said second position about a first pivot axis located along said first edge, said mounting member adapted to pivot between said first position and a third position about a second pivot axis located along said second edge of said base member.

4. The apparatus of claim 3 wherein said first edge and said second edge of said base member are spaced apart and generally parallel to one another.

5. The apparatus of claim 3 or claim 4 wherein said mounting member includes a lip member extending outwardly from said first edge of said base member, said lip member and said base member forming a curved comer surface at said first edge of said base member, said curved corner surface adapted to reduce friction with said retainer member when said mounting member pivots from said second position toward said first position.

6. The apparatus of claim 3 or claim 4 wherein said mounting member includes a lip member extending outwardly from said base member, said lip member adapted to assist in removing said biasing member from said cavity.

7. The apparatus of claim 2 wherein said scraper blade includes an arm member having a first end and second end, said first end of said arm member being attached to said mounting member, said second end of said arm member being attached to a scraping element.

8. The apparatus of any preceding claim including one or more finger members associated with said cavity, said finger members adapted to retain said biasing member within said cavity.

9. The apparatus of claim 8 wherein said retainer member includes one or more walls, said one or more walls adapted to retain said biasing member within said cavity.

10. The apparatus of claim 8 or claim 9 wherein said one or more finger members form an opening in communication with said cavity, said opening adapted to receive the scraper blade.

11. The apparatus of any preceding claim including a selectively removable restraining member located adjacent said retainer member, said restraining member adapted to retain said biasing member within said cavity, said restraining member adapted to be selectively removed from adjacent said retainer member to provide an opening in communication with said cavity through which said biasing member can be removed from said cavity.

12. The apparatus of claim 11 including one or more shims located between said biasing member and said retainer member.

13. The scraping device of claim 2 wherein said biasing member is adapted to bias said scraper blade into engagement with the surface to be cleaned with a scraping force when said scraper blade is in said second position, and said biasing member is adapted to reengage said scraper blade with the surface to be cleaned with a reengagement force that is approximately equal to the scraping force when the scraper blade pivots away from the surface to be cleaned due to engagement with an obstruction on the surface to be cleaned.

14. The apparatus of claim 1 wherein said biasing member provides a floating pivot point that enables said mounting member to pivot in multiple directions about said floating pivot point.

15. The apparatus of any preceding claim wherein said biasing member comprises a pad.

16. The apparatus of any preceding claim wherein said resilient elastomeric material that forms said biasing member comprises a polyurethane composition, wherein said polyurethane composition preferablycomprises 140 parts by weight of a diol, from about 50 to 70 parts by weight of a diisocyanate compound, said diols and diisocyanate compounds being selected from the group consisting of reactants capable of forming polyurethanes, from about one to 30 percent by weight of a plasticizer based upon the weight of the polyurethane composition, and from zero to about 100 parts by weight of mineral filler, based upon 100 parts by weight ofthe polyurethane composition, wherein said plasticizer of said polyurethane composition comprises from about 5 to 13 parts by weight mineral oil, and wherein said mineral filler of said polyurethane composition is selected from the group consisting of calcium carbonate and clays.

17. A scraper blade for a conveyor belt cleaner, said scraper blade including: an arm member having a first end and a second end;
a scraping element attached to said second end of said arm member; and
a mounting member attached to said first end of said arm member, said mounting member including a base member having a first edge and a second edge;
whereby said scraper blade is adapted to pivot between a first position and a second position about a first pivot axis located at said first end of said base member, and to pivot between a third position and the first position about a second pivot axis located at said second edge of said base member.

18. The scraper blade of claim 17 wherein said base member comprises a plate-like member wherein said first edge is generally linear and said second edge is generally linear, said second edge being spaced apart from and generally parallel to said first edge.

19. The scraper blade of claim 17 wherein said mounting member includes a lip member extending from said first edge of said base member at an angle to said base member.
